(19) Europäisches Patentamt
European Patent Office
Office européen des brevets

(11) **EP 2 126 510 B1**

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **08715496.9**

(22) Anmeldetag: **15.02.2008**

(51) Int Cl.:
*G01B 11/00* (2006.01)    *G01B 11/275* (2006.01)

(86) Internationale Anmeldenummer:
**PCT/DE2008/000278**

(87) Internationale Veröffentlichungsnummer:
**WO 2008/098568 (21.08.2008 Gazette 2008/34)**

(54) **VERFAHREN UND VORRICHTUNG ZUM BERÜHRUNGSLOSEN BESTIMMEN DES SEITLICHEN VERSATZES GEGENÜBER EINER GERADEAUSRICHTUNG**

METHOD AND APPARATUS FOR THE CONTACTLESS DETERMINATION OF THE LATERAL MISALIGNMENT RELATIVE TO A STRAIGHT DIRECTION

PROCÉDÉ ET DISPOSITIF DE DÉTERMINATION SANS CONTACT D'UN DÉCALAGE LATÉRAL PAR RAPPORT À UNE DIRECTION RECTILIGNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.02.2007 DE 102007008002**

(43) Veröffentlichungstag der Anmeldung:
**02.12.2009 Patentblatt 2009/49**

(73) Patentinhaber: **Kistler Holding AG**
**8408 Winterthur (CH)**

(72) Erfinder:
• **PÜLLEN, Lukas**
**35390 Giessen (DE)**
• **KAUL, Dietmar**
**35580 Wetzlar (DE)**
• **DÖRR, Michael**
**35644 Hohenahr (DE)**

(74) Vertreter: **Zwick, Evelyn**
**Kistler Holding AG**
**Eulachstrasse 22**
**8408 Winterthur (CH)**

(56) Entgegenhaltungen:
**WO-A-01/38843    US-A1- 2006 045 314**

EP 2 126 510 B1

**Beschreibung**

Die vorliegende Erfindung bezieht sich auf ein Verfahren und eine Vorrichtung zur berührungslosen Bestimmung des seitlichen Versatzes gegenüber einer Geradeausrichtung bei Bewegung eines Objektes relativ zu einem Objekt mit stochastischer Oberflächenstruktur mit Abbilden der Oberflächenstruktur auf einen photoempfindlichen Sensor.

Üblicherweise ist dazu an einem in Bewegung befindlichen Objekt ein Sensor befestigt, mit dem Messgrößen relativ zu einem anderen Objekt mit stochastischer Oberfläche ermittelt werden können. Beispielsweise kann ein in Bewegung befindliches Objekt ein Fahrzeug sein, dessen Bewegung gegenüber der Fahrbahn ermittelt wird. Oftmals ist in solchen Fällen der seitliche Versatz als Abweichung der Fahrzeugbewegung von der Geradeausfahrt zu bestimmen. Solange das Fahrzeug beispielsweise geradeaus fährt und keine Störungen auf das Fahrzeug einwirken, ist kein seitlicher Versatz festzustellen. Es ist denkbar, dass z.B. eine auf das in Geradeausbewegung befindliche Fahrzeug einwirkende seitliche Windböe das Fahrzeug seitlich versetzt.

Die Erfindung bezieht sich im Besonderen auf ein Verfahren und eine Vorrichtung zur Bestimmung des Winkels als Größe für die Abweichung der Bewegung von der Geradeausrichtung oder Sollrichtung. Insbesondere bezieht sich die Erfindung auf ein Verfahren und eine Vorrichtung zur Messung des Schräglaufwinkels.

Der Schräglaufwinkel ist in der Fahrzeugtechnik und Fahrzeugentwicklung von nicht schienengebundenen Landfahrzeugen eine wichtige Kenngröße. In der Reifenentwicklung können z.B. auf diese Weise Rückschlüsse auf die Seitenführungskräfte und das Fahrverhalten der Reifen eines Fahrzeuges gezogen werden.

Unter Schräglaufwinkel ist in diesem Fall der Winkel zwischen der Richtung, in die ein Reifen zeigt, und der Richtung, in der er sich tatsächlich auf der Fahrbahn bewegt zu verstehen. Hat demnach ein Reifen einen großen Schräglaufwinkel, ist ein starker Lenkeinschlag erforderlich, um die gewünschte Richtungsänderung zu bewirken. Je steifer der Reifenaufbau, desto geringer ist meistens der Schräglaufwinkel und desto sicherer das Fahrverhalten, jedoch meist auf Kosten des Komforts.

Ein Reifen, der geradeaus zeigt während sich das Fahrzeug gleichförmig geradeaus bewegt, hat somit einen Schräglaufwinkel von 0°; ein Reifen, der um 5° nach links zeigt während sich das Fahrzeug beispielsweise wegen Aquaplaning weiterhin geradeaus bewegt, weist einen Schräglaufwinkel von 5° auf.

Mit Hilfe der gleichzeitigen Messung des Schräglaufwinkels an Vorder- und Hinterrädern kann auf den sogenannten Schwimmwinkel, also die Drehung des gesamten Fahrzeugs gegen die Bewegungsrichtung, geschlossen werden.

Aus DE 40 30 653 A1 ist ein Verfahren zur Bestimmung des Schräglaufwinkels eines gebremsten Fahrzeuges bekannt. Bei dem dort beschriebenen Verfahren, wird ausgehend von einem vereinfachten Fahrzeugmodell und unter Verwendung der Radgeschwindigkeit, des Lenkwinkels, der Giergeschwindigkeit und des Hauptbremszylinderdrucks als Messgrößen der Schräglaufwinkel als Schätzgröße ermittelt. Das Verfahren erfordert demnach eine Vielzahl von zusätzlich zu ermittelnden oder bekannten Messgrößen. Es handelt sich nicht um eine Messung, sondern um eine Schätzung des Schräglaufwinkels.

Die US 2006/045314 offenbart ein Meßsystem zur Ermittlung von Objektverschiebungen mittels eines Bildkorrelationsverfahrens.

Der Erfindung lag die Aufgabe zugrunde, ein Verfahren zur berührungslosen Bestimmung des seitlichen Versatzes gegenüber einer Geradeausrichtung bei Bewegung eines Objektes relativ zu einem Objekt mit stochastischer Oberflächenstruktur, insbesondere zur hochauflösenden Bestimmung des Schräglaufwinkels zu schaffen. Eine weitere Aufgabe bestand darin, eine Vorrichtung zu realisieren, mit der der seitliche Versatz mit hoher Genauigkeit, auch bei niedrigen Geschwindigkeiten ermittelt werden kann, die kompakt und leicht aufgebaut ist, wenig störanfällige Bauteile aufweist und die abstandsunabhängig mit gleichbleibender Genauigkeit Messergebnisse zur Bestimmung des Schräglaufwinkels liefert.

Diese Aufgabe wird bei einem Verfahren der eingangs genannten Art durch die kennzeichnenden Merkmale des Patentanspruchs 1 und bei einer Vorrichtung der eingangs genannten Art durch die kennzeichnenden Merkmale des Patentanspruchs 9 gelöst. Vorteilhafte Ausgestaltungen ergeben sich aus den Merkmalen der jeweiligen abhängigen Ansprüche.

Das erfindungsgemäße Verfahren und die Vorrichtung zeichnen sich dadurch aus, dass der seitliche Versatz gegenüber einer vorbestimmten Geradeausrichtung bei Bewegung eines Objektes relativ zu einem anderen Objekt mit stochastischer Oberflächenstruktur dadurch ermittelt wird, dass die Oberflächenstruktur auf einen photoempfindlichen Sensor, der sich in der Bildebene einer Optik befindet, abgebildet wird. Der photoempfindliche Sensor wird aus mindestens zwei in Geradeausrichtung hintereinander in definiertem Abstand zueinander angeordneten gleichen Sensorelementen gebildet.

Durch weitere in gleicher Weise hinter dem zweiten Sensorelement angeordnete Sensorelemente kann die Genauigkeit bei der Bestimmung des seitlichen Versatzes erhöht werden. Die Sensorelemente weisen eine ortsauflösende Längserstreckung quer zur Geradeausrichtung auf und erzeugen ein der Oberflächenstruktur entsprechendes Ortsfrequenz-Signal, welches mit einer Elektronikeinheit ausgelesen wird. Das Ortsfrequenz-Signal eines in Bewegungsrichtung zweiten Sensorelementes wird derart zeitlich verschoben zum Ortsfrequenz-Signal des ersten Sensorelementes ausgelesen, dass auf beide Sensorelemente dieselbe, zumindest ausschnittsweise übereinstimmende Oberflächenstruktur abgebildet wird. Zur Ermittlung eines Korrelationskoeffizienten werden in einer Recheneinheit die Ortsfrequenz-Signale des ersten und des zweiten Sensorelementes miteinander korreliert. Die Größe des seitlichen Versatzes der korrelierten Ortsfrequenz-Signale zueinander auf den ortsauflösenden Sensorelementen wird mit Hilfe des in der Recheneinheit erzeugten Korrelationskoeffizienten bestimmt. Selbstverständlich können anstelle von mindestens zwei diskreten, also einzelnen Sensorelementen auch spezielle, z.B. Photodiodenchips verwendet werden, die mehrere Sensorelemente mit einer ortsauflösenden Längserstreckung quer zur Geradeausrichtung in Fahrtrichtung hintereinander auf einem Träger aufweisen. In diesem Fall ist der Abstand der einzelnen Sensorelemente mit hoher Genauigkeit reproduzierbar und muss nicht, wie bei der Fertigung aus Einzelelementen, aufwändig messtechnisch ermittelt und gegebenenfalls kalibriert werden.

In vorteilhafter Weise wird zusätzlich die Bewegungsgeschwindigkeit bestimmt und in Abhängigkeit davon die Zeitverschiebung zwischen dem Auslesen des ersten und eines zweiten Sensorelementes festgelegt. Je genauer die Bewegungsgeschwindigkeit v in Geradeausrichtung und damit senkrecht zur Längserstreckung der Sensorelemente ermittelt wird, desto genauer kann die optimale Zeitverschiebung t als Funktion des definierten Abstandes $s_a$ zwischen dem ersten und einem zweiten Sensorelement festgelegt werden ($t=s_a/v$).

Eine weitere Möglichkeit zur Verbesserung der Genauigkeit besteht darin, dass mehrere der n zweiten Sensorelemente nacheinander mit Zeitverschiebungen n x t ausgelesen, alle auf diese Weise ermittelten zweiten Ortsfrequenz-Signale jeweils mit dem ersten Ortsfrequenz-Signal korreliert werden und daraus ein optimaler Korrelationskoeffizient zur Bestimmung des seitlichen Versatzes auf den ortsauflösenden Sensorelementen berechnet wird. Als idealer Korrelationskoeffizient wird beispielsweise der Zahlenwert 1 als Maximum angenommen, so dass ein optimaler Korrelationskoeffizient definitionsgemäß dem Zahlenwert 1 möglichst nahe kommen soll.

In einer weiteren Ausführungsform der Erfindung wird zu der mit Hilfe der Bewegungsgeschwindigkeit bestimmten Zeitverschiebung ein Zeitbereich definiert, in dem ein zweites Sensorelement mehrfach ausgelesen wird. Anschließend werden alle zweiten Ortsfrequenz-Signale jeweils mit dem ersten Ortsfrequenz-Signal korreliert und daraus ein gemittelter Korrelationskoeffizient berechnet. Auf diese Weise kann besonders im Bereich langsamer Relativgeschwindigkeiten eine eventuell auftretende Ungenauigkeit bei der Bestimmung der Bewegungsgeschwindigkeit ausgeglichen und eine höhere Genauigkeit bei der Ermittlung des Korrelationskoeffizienten erzielt werden.

Werden als ortsauflösende Sensorelemente Photodiodenzeilen mit zur Geradeausrichtung parallelen streifen-förmigen Photodiodenelementen ($n_i$) mit einer Streifenbreite b gewählt, kann die Berechung des Korrelationskoeffizienten mit besonders geringem Rechenaufwand durchgeführt werden. In diesem Fall werden die Korrelationskoeffizienten ($r(i)$) nach der Vorschrift

$$r(i) = \frac{\sum_{i=1}^{n} x_i \, y_i - n \, \bar{x} \, \bar{y}}{\sqrt{\left(\sum_{i=1}^{n} x_i^2 - n \, \bar{x}^2\right)\left(\sum_{i=1}^{n} y_i^2 - n \, \bar{y}^2\right)}}$$

bestimmt, wobei

$r(i)$: die Korrelationskoeffizienten als Funktion von i
$n$: die Anzahl der Photodiodenelemente
$i$: der Index (1...n)
$x_i$: das Photodiodensignal der ersten Zeile
$\bar{x}$: der Mittelwert aller Photodiodensignale der ersten Zeile
$y_i$: das Photodiodensignal der zweiten Zeile und
$\bar{y}$: der Mittelwert aller Photodiodensignale der zweiten Zeile ist.

Auf diese Weise kann der seitliche Versatz dadurch bestimmt werden, dass der Indexwert $i_{max}$ ermittelt wird, bei dem die Funktion des Korrelationskoeffizienten ein Maximum (MAX [$r(i)$]) aufweist. Der Betrag des seitlichen Versatzes $s_b$ ist dann besonders einfach aus der bekannten Streifenbreite **b** der streifenförmigen Photoelemente, multipliziert mit dem Indexwert $i_{max}$ zu berechnen.

In einer weiteren Ausführungsform der Erfindung wird ein Winkel $\alpha$ aus der geometrischen Beziehung zwischen Abstand $s_a$ der ausgelesenen Sensorelemente in Geradeausrichtung und dem Betrag des seitlichen Versatzes $s_b$ mit

$\alpha$ = arctan $s_b/s_a$ berechnet.

Eine Verbesserung der Signalqualität der von den Photodiodenzeilen erzeugten Ortsfrequenz-Signale wird erreicht, indem die Belichtungszeit der Sensorelemente an die Bewegungsgeschwindigkeit des Sensors gegenüber der Oberflächenstruktur angepasst wird. Die Belichtungszeit wird in diesem Fall als die Zeit verstanden, in der das Photodiodensignal im Sensorelement aufgebaut, d.h. aufintegriert wird. Um einer Glättung der Ortsfrequenz-Signale entgegenzuwirken, ist bei schnellen Geschwindigkeiten eine kürzere Belichtungszeit zu wählen, während bei langsamen Geschwindigkeiten eine längere Belichtungszeit erlaubt ist. Um genügend Lichtenergie auf den Sensorelementen zu erhalten, ist es insbesondere bei hohen Geschwindigkeiten und kurzen Belichtungszeiten für die Photodiodenzeilen von Vorteil, wenn die abzubildende Oberflächenstruktur mit einer Beleuchtungseinrichtung zusätzlich beleuchtet wird.

In einer besonders vorteilhaften Ausgestaltung der Erfindung wird die Zeitverschiebung zwischen dem Auslesen der ersten und zweiten Sensorelemente unter Berücksichtigung des Abbildungsmaßstabes der Optik derart gewählt, dass auf die Sensorelemente in Bewegungsrichtung übereinstimmende Ausschnitte der Oberflächenstruktur abgebildet werden. Bei vorgegebenem Abstand $\mathbf{s_a}$ der Sensorelemente zueinander und einem Abbildungsmaßstab $\mathbf{A}$ der Optik ist die Zeitverschiebung daher als Quotient aus dem Abstand $\mathbf{s_a}$ und der mit dem Abbildungsmaßstab $\mathbf{A}$ multiplizierten Geschwindigkeit v zu bilden. (t=$s_a$/A·v)

Je genauer die Zeitverschiebung ermittelt wird, desto besser lässt sich der Korrelationskoeffizient bestimmen. Abweichung sind in einem gewissen Bereich tolerierbar, jedoch sollte sich der Ausschnitt der auf das erste Sensorelement abgebildeten Oberflächenstruktur höchstens um den Betrag der Höhe eines Photodiodenelements (Pixel) auf einem der zweiten Photodiodenelemente verschoben haben, da ansonsten die Korrelation nicht mehr zuverlässig durchgeführt werden kann. Auf diese Weise ist sichergestellt, dass die beiden ermittelten Ortsfrequenz-Signale miteinander korrelierbar sind.

Um eine Veränderung des Abbildungsmaßstabes der Optik aufgrund einer Abstandsveränderung zwischen Sensorvorrichtung und der abzubildenden Oberflächenstruktur zu vermeiden, ist die Optik erfindungsgemäß für eine telezentrische Abbildung der Oberflächenstruktur ausgelegt. Auf diese Weise ist ein großer Arbeitsabstandsbereich realisierbar. Durch gezielte Veränderung des Abbildungsmaßstabes der Optik ist das Sensorsystem insbesondere an die Geometrie (Abstand und Breite der Pixel) der streifenförmigen Photodiodenelemente und an unterschiedliche Beschaffenheiten der stochastischen Oberflächenstruktur anpassbar, um gut auswertbare Ortsfrequenz-Signale zu erhalten.

Wird erfindungsgemäß zusätzlich ein Abstandssensor vorgesehen, kann unter Berücksichtigung eines sich verändernden Abbildungsmaßstabes z.B. beim Überschreiten des telezentrischen Arbeitsabstandsbereichs der sich dann ergebende veränderte Abbildungsmaßstab berücksichtigt werden und der Arbeitsabstandsbereich vergrößert werden. Auf diese Weise kann jedoch auch unter Verzicht auf die telezentrische Eigenschaft der Optik anhand des gemessenen Abstandes die bekannte abstandsabhängige Veränderung des Abbildungsmaßstabes berücksichtigt werden. Oftmals geht mit der Verwendung einer telezentrischen Optik aufgrund verwendeter Lochblenden Lichtenergie verloren. Wird diese Energie jedoch zur Signalerzeugung benötigt, kann bei Verwendung des Abstandssensors auf die Optik für eine telezentrische Abbildung der Oberflächenstruktur verzichtet werden. Der auf diese Weise gebildete Sensor ist ebenfalls in der Lage, nahezu abstandsunabhängige Messergebnisse zu liefern.

In einer weiteren Ausgestaltung der Vorrichtung ist zusätzlich ein Geschwindigkeitssensor zum Bestimmen der Relativgeschwindigkeit in Geradeausrichtung, also senkrecht zur Längsausstreckung der Sensorelemente, vorgesehen. Insbesondere berührungslos arbeitende Geschwindigkeitssensoren, die den absoluten Betrag der Geschwindigkeit des Sensors senkrecht zur Längsausstreckung der Sensorelemente und damit unabhängig vom Bewegungswinkel liefern sind geeignet, um die optimale Zeitverschiebung zwischen dem Auslesen des ersten und eines zweiten Sensorelements zu ermitteln.

Es hat sich gezeigt, dass in einer besonders einfachen Ausführungsform der Vorrichtung das Sensorelement aus zwei Photodiodenzeilen mit zur Geradeausrichtung parallelen streifenförmigen Photodiodenelementen (Pixel) gebildet werden kann und die Ortsfrequenz-Signale eine überraschend hohe Qualität aufweisen. Auf diese Weise sind mit standardisierten Photodiodenzeilen kompakt bauende und kostengünstig herstellbare Sensoren realisierbar.

Eine Diodenzeile mit beispielsweise 512 Pixeln, die jeweils eine Breite von ca. 12 $\mu$m haben und eine Pixelhöhe von 250 $\mu$m aufweisen, ist geeignet, um in der zuvor beschriebenen Sensorvorrichtung eingesetzt zu werden. In diesem Fall hat sich in überraschender Weise gezeigt, dass bei einer übereinstimmenden Abbildung der Oberflächenstruktur auf nur 100 Pixeln der zweiten Diodenzeile bereits eine erfolgreiche Korrelation durchgeführt werden kann. Die Korrelierbarkeit der Ortsfrequenz-Signale der beiden Diodenzeilen bestimmt den maximal ermittelbaren seitlichen Versatz. Im Hinblick auf die Berechnung und Auflösungsgenauigkeit des Winkels, bzw. Schräglaufwinkels bedeutet das, dass die Auflösung vom Abstand $\mathbf{s_a}$ der Sensorelemente zueinander abhängt. Je weiter die Diodenzeilen auseinander liegen, desto größer wird demnach das Auflösungsvermögen, desto kleiner jedoch auch der maximal bestimmbare Winkel. Durch eine Verwendung längerer Diodenzeilen kann der maximal bestimmbare Winkel vergrößert werden. Die maximale Länge der verwendbaren Diodenzeilen wird durch das Bildfeld der Abbildungsoptik begrenzt.

Da die optimale Zeitverschiebung zwischen dem Auslesen des ersten und eines zweiten Sensorelements von der Geschwindigkeit und dem Abbildungsmaßstab der Optik abhängt und bei hohen Geschwindigkeiten immer kürzer wird, muss die Auslesefrequenz der Diodenzeile entweder an die Zeitverschiebung dynamisch anpassbar sein oder derart hoch gewählt sein, dass während der kürzest möglichen Zeitverschiebung (Maximalgeschwindigkeit) die Diodenzeile noch vollständig auslesbar ist.

Ein Ausführungsbeispiel einer erfindungsgemäßen Vorrichtung ist in der Zeichnung schematisch dargestellt und wird nachfolgend anhand der Figuren näher beschrieben.

Dabei zeigen:

Fig. 1    eine vereinfachte perspektivische Darstellung der Sensorvorrichtung

Fig. 2    die geometrische Anordnung der Sensorelemente

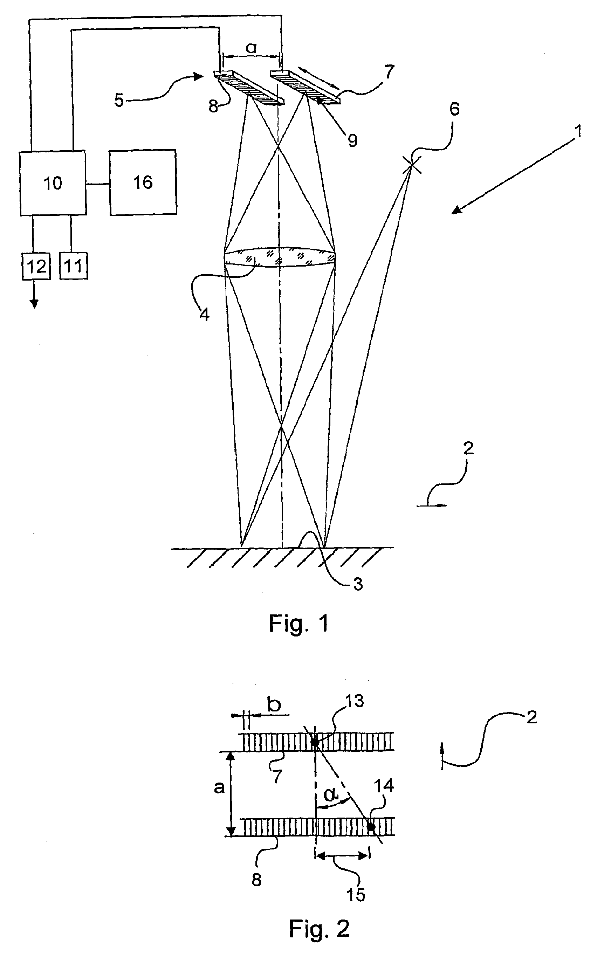

In Figur 1 ist eine Sensorvorrichtung 1 in einer vereinfachten perspektivischen Darstellung gezeigt. Die Bewegung in Geradeausrichtung 2 gegenüber einem Objekt mit stochastischer Oberfläche ist durch einen Pfeil dargestellt. Ein Bereich der abzubildenden Oberflächenstruktur 3 wird durch eine Optik 4, die durch eine Linse angedeutet ist, auf eine Sensoranordnung 5 abgebildet. Durch eine Beleuchtungseinrichtung 6 wird der Bereich der abzubildenden Oberflächenstruktur 3 schräg beleuchtet, um eine Art Dunkelfeldbeleuchtung zur Verbesserung des Kontrastes zu erzielen. Die Sensoranordnung 5 besteht aus einer ersten Photodiodenzeile 7 und einer dazu im Abstand a zweiten Photodiodenzeilen 8. In der Längserstreckung weisen die Photodiodenzeilen 7, 8 n streifenförmige Pixel 9 auf. Zum gesteuerten Auslesen der Photodiodenzeilen 7, 8 ist eine Elektronikeinheit 10 vorgesehen. Die Elektronikeinheit 10 verarbeitet ebenfalls die Signale eines schematisch dargestellten Geschwindigkeitssensors 11 und eines optional vorgesehenen Abstandssensors 12. Die von der Elektronikeinheit 10 verarbeiteten Signale werden zur Korrelation einer Recheneinheit 16 zugeführt. Die gesamte Sensorvorrichtung 1 ist in einem nicht weiter dargestellten Gehäuse angeordnet.

Fig. 2 zeigt die geometrische Anordnung der Photodiodenzeilen 7, 8 mit ihrem Abstand a. Die Darstellung der Geradeausrichtung erfolgt durch den Pfeil 2. Auf der ersten Diodenzeile 7 ist ein Punkt 13 dargestellt, der als Punkt 14 den seitlichen Versatz 15 des Ortsfrequenz-Signals auf der zweiten Photodiodenzeile 8 verdeutlichen soll. Durch die geometrische Beziehung zwischen Abstand a und seitlichem Versatz 15, der sich aus der Multiplikation der Pixelbreite b mit der Anzahl der Pixel des seitlichen Versatzes ergibt, ist der Schräglaufwinkel $\alpha$ bestimmbar.

**Bezugszeichenliste**

| | |
|---|---|
| 1 | Sensorvorrichtung |
| 2 | Geradeausrichtung |
| 3 | Bereich der abzubildenden Oberflächenstruktur |
| 4 | Optik |
| 5 | Sensoranordnung |
| 6 | Beleuchtungseinrichtung |
| 7 | erste Photodiodenzeile |
| 8 | zweite Photodiodenzeile |
| 9 | Pixel |
| 10 | Elektronikeinheit |
| 11 | Geschwindigkeitssensor |
| 12 | Abstandssensor |
| 13 | erster Punkt |
| 14 | zweiter Punkt |
| 15 | seitlicher Versatz |
| 16 | Recheneinheit |
| a | Abstand |
| b | Pixelbreite |
| $\alpha$ | Schräglaufwinkel |

**Patentansprüche**

1. Verfahren zum berührungslosen Bestimmen des seitlichen Versatzes (15) gegenüber einer Geradeausrichtung (2) bei Bewegung eines Objektes relativ zu einem Objekt mit stochastischer Oberflächenstruktur mit Abbilden der Oberflächenstruktur (3) auf einen photoempfindlichen Sensor (5), **dadurch gekennzeichnet, dass**

- die Oberflächenstruktur (3) auf mindestens zwei in Geradeausrichtung (2) hintereinander in definiertem Abstand (a) zueinander angeordnete gleiche Sensorelemente (7, 8) abgebildet wird, die eine ortsauflösende Längserstreckung quer zur Geradeausrichtung (2) aufweisen und aus Photodiodenzeiten (7, 8) mit zur Geradeausrichtung (2) parallelen streifenformigen Photodiodenelementen (9) bestehen,
- ein der Oberflächenstruktur (3) entsprechendes Ortsfrequenz-Signal von den Sensorelementen (7, 8) erzeugt wird,
- das Ortsfrequenz-Signal des in Bewegungsrichtung zweiten Sensorelementes (8) derart zeitlich verschoben zum Ortsfrequenz-Signal des ersten Sensorelementes (7) ausgelesen wird, dass auf beide Sensorelemente (7, 8) dieselbe, zumindest ausschnittsweise übereinstimmende, Oberflächenstruktur (3) abgebildet wird, und
- die Ortsfrequenz-Signale des ersten und zweiten Sensorelementes (7, 8) zur Ermittlung eines Korrelationskoeffizienten miteinander korreliert werden und daraus die Größe des seitlichen Versatzes (15) der korrelierten Ortsfrequenz-Signale zueinander auf den ortsauflösenden Sensorelementen (7, 8) bestimmt wird.

2.  Verfahren nach Patentanspruch 1), **dadurch gekennzeichnet, dass** zusätzlich die relative Bewegungsgeschwindigkeit bestimmt und in Abhängigkeit davon die Zeitverschiebung zwischen dem Auslesen des ersten (7) und eines zweiten (8) Sensorelementes festgelegt wird.

3.  Verfahren nach Patentanspruch 1) oder 2), **dadurch gekennzeichnet, dass** zu der Zeitverschiebung mehrere zweite in Geradeausrichtung (2) hintereinander angeordnete Sensorelemente (8) nacheinander ausgelesen werden, alle zweiten Ortsfrequenz-Signale jeweils mit dem ersten Ortsfrequenz-Signal korreliert werden und daraus ein optimaler Korrelationskoeffizient berechnet wird.

4.  Verfahren nach Patentanspruch 1) oder 2), **dadurch gekennzeichnet, dass** zu der Zeitverschiebung ein Zeitbereich definiert wird, in diesem Zeitbereich ein zweites Sensorelement (8) mehrfach ausgelesen wird, alle zweiten Ortsfrequenz-Signale jeweils mit dem ersten Ortsfrequenz-Signal korreliert werden und daraus ein gemittelter Korrelationskoeffizient berechnet wird.

5.  Verfahren nach einem der vorhergehenden Patentansprüche, **dadurch gekennzeichnet, dass** die Korrelationskoeffizienten (r(i)) nach der Vorschrift bestimmt werden:

$$r(i) = \frac{\sum_{i=1}^{n} x_i \, y_i - n \, \bar{x} \, \bar{y}}{\sqrt{\left( \sum_{i=1}^{n} x_i^2 - n \, \bar{x}^2 \right) \left( \sum_{i=1}^{n} y_i^2 - n \, \bar{y}^2 \right)}}$$

mit:

r(i): Korrelationskoeffizienten als Funktion von i, $-1 \leq r(i) \leq 1$
n: Anzahl der Photodiodenelemente
i: Index (1...n)
$\underline{x}_i$: Photodiodensignal der ersten Zeile
$\bar{x}$ : Mittelwert aller Photodiodensignale der ersten Zeile
$\underline{y}_i$: Photodiodensignal der zweiten Zeile
$\bar{y}$ : Mittelwert aller Photodiodensignale der zweiten Zeile.

6.  Verfahren nach einem der vorgenannten Patentansprüche, **dadurch gekennzeichnet, dass** aus der geometrischen Beziehung zwischen dem Abstand (a) der ausgelesenen Sensorelemente (7, 8) in Geradeausrichtung (2) und dem seitlichen Versatz (15) ein Winkel ($\alpha$) berechnet wird.

7.  Verfahren nach Patentanspruch 2), **dadurch gekennzeichnet, dass** die Belichtungszeit der Sensorelemente (7, 8) an die Geschwindigkeit angepasst wird.

8.  Verfahren nach einem der Patentansprüche 3) bis 5), **dadurch gekennzeichnet, dass** die Zeitverschiebung zwi-

EP 2 126 510 B1

schen dem Auslesen der ersten und zweiten Sensorelemente (7, 8) unter Berücksichtigung des Abbildungsmaßstabes der die Oberflächenstruktur (3) abbildenden Optik (4) derart gewählt wird, dass sich der Ausschnitt der auf das erste Sensorelement (7) abgebildeten Oberflächenstruktur (3) höchstens um den Betrag der Höhe eines Photodiodenelements (Pixel) (9) auf einem der zweiten Sensorelemente (8) verschoben hat.

9. Vorrichtung zum berührungslosen Bestimmen des seitlichen Versatzes (15) gegenüber einer Geradeausrichtung (2) bei Bewegung eines ersten Objektes relativ zu einem zweiten Objekt mit stochastischer Oberflächenstruktur mit einem auf dem ersten Objekt anordbaren photoempfindlichen Sensor (5) worauf die Oberflächenstruktur (3) abbildbar ist,

   **dadurch gekennzeichnet, dass**

   - die Vorrichtung eine einzige Optik (4) zur Abbildung der Oberflächenstruktur (3) umfasst,
   - in der Bildebene der Optik (4) in Geradeausrichtung (2) hintereinander in definiertem Abstand (a) zueinander mindestens zwei gleiche Sensorelemente (7, 8) angeordnet sind, die eine ortsauflösende Längserstreckung quer zur Geradeausrichtung (2) aufweisen und aus Photodiodenzeilen (7, 8) mit zur Geradeausrichtung (2) parallelen streifenförmigen Photodiodenelementen (9) bestehen,
   - die Vorrichtung weiter eine Elektronikeinheit (10) zum gesteuerten Auslesen der ortsauflösenden Signale der Sensorelemente (7, 8) und
   - eine Recheneinheit (16) zur Korrelation der aus den Sensorelementen (7, 8) ausgelesenen Signale und zur Berechnung daraus des Versatzes (15) der Bilder der Oberflächenstruktur (3) auf den Sensorelementen (7, 8) umfasst.

10. Vorrichtung nach Patentanspruch 9), **dadurch gekennzeichnet, dass** die Optik (4) für eine telezentrische Abbildung der Oberflächenstruktur (3) ausgelegt ist.

11. Vorrichtung nach Patentanspruch 9), **dadurch gekennzeichnet, dass** zusätzlich ein Abstandssensor (12) vorgesehen ist.

12. Vorrichtung nach Patentanspruch 10) oder 11), **dadurch gekennzeichnet, dass** zusätzlich ein Geschwindigkeitssensor (11) zum Bestimmen der Relativgeschwindigkeit in Geradeausrichtung (2) vorgesehen ist.

13. Vorrichtung nach einem der Patentansprüche 9) bis 12), **dadurch gekennzeichnet, dass** eine Beleuchtungseinrichtung (6) zur Beleuchtung der abzubildenden Oberflächenstruktur (3) vorgesehen ist.

## Claims

1. A method for contactless determination of the lateral offset (15) relative to a straight direction (2) when an object moves relative to an object having a stochastic surface structure comprising imaging of the surface structure (3) on a photosensor (5) **characterized in that**:

   - the surface structure (3) is imaged on at least two equal sensor elements (7, 8) positioned one after the other at a defined distance (a) in the straight direction (2), said sensor elements having a spatially resolving longitudinal extension transverse to the straight direction (2) and consisting of photodiode arrays (7, 8) with strip-shaped photodiode elements (9) arranged parallel to the straight direction (2);
   - a spatial frequency signal corresponding to the surface structure (3) is generated by the sensor elements (7, 8) ;
   - the spatial frequency signal of the second sensor element (8) in the direction of movement is read with a temporal delay relative to the spatial frequency signal of the first sensor element (7) such that on both sensor elements (7, 8) is imaged the same, at least partly identical surface structure (3), and
   - the spatial frequency signals of said first and second sensor elements (7, 8) are correlated with each other to determine a correlation coefficient and from said correlation coefficient is determined the amount of the lateral offset (15) of the correlated spatial frequency signals to each other on the spatially resolving sensor elements (7, 8).

2. The method as claimed in claim 1 **characterized in that** also the relative movement velocity is determined and as a function thereof the time delay between reading of the first (7) and second (8) sensor elements is established.

3. The method according to claim 1 or 2 **characterized in that** after the time delay a plurality of second sensor elements

7

(8) positioned one after the other in the straight direction (2) are read sequentially, each of the second spatial frequency signals is correlated with the first spatial frequency signal, and an optimum correlation coefficient is calculated therefrom.

4. The method according to claim 1 or 2 **characterized in that** after the time delay a time range is defined in which time range a second sensor element (8) is read multiple times, each of the second spatial frequency signals is correlated with the first spatial frequency signal, and a mean correlation coefficient is calculated therefrom.

5. The method according to any of the preceding claims **characterized in that** the correlation coefficients (r(i)) are calculated according to the following equation:

$$r(i) = \frac{\sum_{i=1}^{n} x_i \, y_i - n \, \bar{x} \, \bar{y}}{\sqrt{\left(\sum_{i=1}^{n} x_i^2 - n \, \bar{x}^2\right)\left(\sum_{i=1}^{n} y_i^2 - n \, \bar{y}^2\right)}}$$

wherein

r(i): correlation coefficient as a function of i, $-1 \leq r(i) \leq 1$
n: number of photodiode elements
i: index (1 ... n)
$x_i$: photodiode signal of the first array
$\bar{x}$ : mean value of all photodiode signals of the first array
$y_i$: photodiode signal of the second array, and
$\bar{y}$ : mean value of all photodiode signals of the second array.

6. The method according to any of the preceding claims **characterized in that** an angle ($\alpha$) is calculated from the geometric relationship between the distance (a) of the sensor elements (7, 8) from which readings are taken in the straight direction (2) and the amount of the lateral offset (15).

7. The method according to claim 2 **characterized in that** the exposure time of the sensor elements (7, 8) is adjusted to the velocity.

8. The method according to any of claims 3 to 5 **characterized in that** the time delay between reading of the first and second sensor elements (7, 8) is chosen taking into account the imaging magnification of the optical system (4) by which the surface structure (3) is imaged such that the portion of the surface structure (3) imaged on the first sensor element (7) is shifted on one of the second sensor elements (8) at the most by the amount of the height of one photodiode element (pixel) (9).

9. An apparatus for contactless determination of the lateral offset (15) relative to a straight direction (2) during movement of a first object relative to a second object having a stochastic surface structure comprising a photosensor (5) placeable on the first object on which the surface structure (3) can be imaged **characterized in that**:

- the apparatus comprises a single optical system (4) for imaging the surface structure (3),
- in the image plane of said optical system (4) are positioned at least two equal sensor elements (7, 8) one after the other at a defined distance (a) in the straight direction (2), said sensor elements having a spatially resolving longitudinal extension transverse to the straight direction (2) and consisting of photodiode arrays (7, 8) with strip-shaped photodiode elements (9) arranged parallel to the straight direction (2);
- said apparatus further comprising an electronic unit (10) for controlled reading of the spatially resolving signals from the sensor elements (7, 8), and
- a calculating unit (16) for correlating the signals read from the sensor elements (7, 8) and for calculating the offset (15) of the images of the surface structure (3) on the sensor elements (7, 8) therefrom.

10. The apparatus according to claim 9 **characterized in that** the optical system (4) is configured for telecentric imaging of the surface structure (3).

**11.** The apparatus according to claim 9 **characterized in that** a distance sensor (12) is also provided.

**12.** The apparatus according to claim 10 or 11 **characterized in that** a velocity sensor (11) for determining the relative velocity in the straight direction (2) is also provided.

**13.** The apparatus according to any of claims 9 to 12 **characterized in that** an illumination means (6) is provided for illuminating the surface structure (3) to be imaged.

**Revendications**

**1.** Une méthode pour la détermination sans contact du décalage latéral (15) relative à une direction droite (2) durant le mouvement d'un objet relative à un objet présentant une surface à structure stochastique comprenant l'imagerie de la structure de surface (3) sur un capteur photosensible (5) **caractérisé en ce que**:

- une image de la structure de surface (3) est générée sur au moins deux éléments de capteur pareils (7, 8) positionnés l'un après l'autre à une distance définie (a) dans la direction droite (2), lesdits éléments de capteur présentant une extension longitudinale à résolution spatiale perpendiculairement à la direction droite (2) et constitués de matrices de photodiodes (7, 8) avec éléments de photodiode (9) en forme de bandes arrangés en parallèle à la direction droite (2);
- un signal de fréquence spatiale correspondant à la structure de surface (3) est généré par lesdits éléments de capteur (7, 8);
- le signal de fréquence spatiale d'un deuxième élément de capteur (8) dans la direction de mouvement est lu avec un retard temporel relative au signal de fréquence spatiale du premier élément de capteur (7) afin que soit créée sur les deux éléments de capteur (7, 8) une image de la même, au moins en partie identique, structure de surface (3), et
- les signaux de fréquence spatiales desdits premier et deuxième éléments de capteur (7, 8) sont corrélés entre eux pour déterminer un coefficient de corrélation et dudit coefficient de corrélation est déterminé le montant du décalage latéral (15) des signaux de fréquence spatiales entre eux sur les éléments de capteur à résolution spatiale (7, 8).

**2.** La méthode selon la revendication 1 **caractérisé en ce qu'**en outre la vitesse de mouvement est déterminée et, en fonction de celle-ci, le retard temporel entre la lecture du premier (7) et du deuxième (8) élément de capteur est établi.

**3.** La méthode selon la revendication 1 ou 2 **caractérisé en ce qu'**après le retard temporel une pluralité de deuxièmes éléments de capteur (8) positionnés l'un après l'autre dans la direction droite (2) sont lus en séquence, chacun des deuxièmes signaux de fréquence spatiale est corrélé avec le premier signal de fréquence spatiale et un coefficient de corrélation optimum en est calculé.

**4.** La méthode selon la revendication 1 ou 2 **caractérisé en ce qu'**après le retard temporel une période de temps est définie, dans ladite période de temps un deuxième élément de capteur (8) étant lu plusieurs fois, chacun des deuxièmes signaux de fréquence spatiale est corrélé avec le premier signal de fréquence spatiale et un coefficient de corrélation moyen en est calculé.

**5.** La méthode selon l'une quelconque des revendications précédentes **caractérisé en ce que** les coefficients de corrélation (r(i)) sont calculés en appliquant l'équation suivante:

$$r(i) = \frac{\sum\limits_{i=1}^{n} x_i \, y_i - n \, \bar{x} \, \bar{y}}{\sqrt{\left( \sum\limits_{i=1}^{n} x_i^2 - n \, \bar{x}^2 \right)\left( \sum\limits_{i=1}^{n} y_i^2 - n \, \bar{y}^2 \right)}}$$

dans laquelle

r(i): coefficient de corrélation en fonction de i, $-1 \leq r(i) \leq 1$
n: nombre de éléments de photodiode
i: indice (1 ... n)
$x_i$: signal de photodiode de la première matrice
$\bar{x}$ : valeur moyen de tous les signaux de photodiode de la première matrice
$y_i$ : signal de photodiode de la deuxième matrice et
$\bar{y}$ : valeur moyen de tous les signaux de photodiode de la deuxième matrice.

**6.** La méthode selon l'une quelconque des revendications précédentes **caractérisé en ce qu'**un angle ($\alpha$) est calculé utilisant la relation géométrique entre la distance (a) dans la direction droite (2) des éléments de capteur (7, 8) dont les lectures sont prises et le montant du décalage latéral (15).

**7.** La méthode selon la revendication 2 **caractérisé en ce que** le temps d'exposition des éléments de capteur (7, 8) est ajusté à la vitesse.

**8.** La méthode selon l'une quelconque des revendications 3 à 5 **caractérisé en ce que** le retard temporel entre la lecture des premier et deuxième éléments de capteur (7, 8) est choisi en tenant compte du grossissement d'image du système optique (4) par lequel la structure de surface (3) est imagée, de manière que, la partie de la structure de surface (3) dont l'image est créé sur le premier élément de capteur (7) est décalée sur un des deuxièmes éléments de capteur (8) au maximum par le montant de la hauteur d'un élément de photodiode (pixel) (9).

**9.** Un appareil pour la détermination sans contact du décalage latéral (15) relative à une direction droite (2) durant le mouvement d'un premier objet relative à un deuxième objet présentant une surface à structure stochastique comprenant un capteur photosensible (5) pouvant être placé sur le premier objet sur lequel une image de la structure de surface (3) peut être créée **caractérisé en ce que**:

- ledit appareil comprenant un seul système optique (4) pour imager la structure de surface (3),
- dans le plan d'image du système optique (4) sont positionnés au moins deux éléments de capteur pareils (7, 8) l'un après l'autre à une distance définie (a) dans la direction droite (2), lesdits éléments de capteur présentant une extension longitudinale à résolution spatiale perpendiculairement à la direction droite (2) et constitués de matrices de photodiodes (7, 8) avec éléments de photodiode (9) en forme de bandes arrangés en parallèle à la direction droite (2);
- ledit appareil en outre comprenant une unité électronique (10) pour une lecture contrôlée des signaux à résolution spatiale des éléments de capteur (7, 8) et
- une unité de calcul (16) pour faire la corrélation des signaux lus des éléments de capteur (7, 8) et d'en calculer le décalage (15) des images de la structure de surface (3) sur les éléments de capteur (7, 8).

**10.** L'appareil selon la revendication 9 **caractérisé en ce que** le système optique (4) est configuré pour l'imagerie télécentrique de la structure de surface (3).

**11.** L'appareil selon la revendication 9 **caractérisé en ce qu'**un senseur de distance (12) est également fourni.

**12.** L'appareil selon la revendication 10 ou 11 **caractérisé en ce qu'**un capteur de vitesse (11) pour déterminer la vitesse relative dans la direction droite (2) est également fourni.

**13.** L'appareil selon l'une quelconque des revendications 9 à 12 **caractérisé en ce qu'**un moyen d'éclairage (6) est

EP 2 126 510 B1

fourni pour l'éclairage de la structure de surface (3) à imager.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4030653 A1
- US 2006045314 A